# EUROPEAN PATENT APPLICATION

(11) **EP 1 605 675 A1**
(43) Date of publication of application: **14.12.2005**
(21) Application number: 03720953.3
(22) Date of filing: 25.04.2003
(51) Int. Cl.: H04M 11/04, G08B 25/01

(54) **COMMUNICATION SYSTEM, INFORMATION TERMINAL APPARATUS, COMMUNICATION METHOD, AND PROGRAM THEREOF**

(30) Priority: 06.03.2003 JP 2003059940
(71) Applicant: MATSUSHITA ELECTRIC INDUSTRIAL CO., LTD., Kadoma-shi, Osaka 571-8501 (JP)
(72) Inventor: HASHIMOTO, Kazuhiko, Moriguchi-shi, Osaka 570-0083 (JP); NISHII, Kazunari, Izumi-shi, Osaka 594-0081 (JP); MIKI, Tadashi, Asahi-ku, Osaka-shi, Osaka 535-0011 (JP); YOSHIMURA, Yasuo, Yamatokoriyama-shi, Nara 639-1042 (JP)
(74) Representative: Eisenführ, Speiser & Partner
(86) International application number: PCT/JP2003/005300
(87) International publication number: WO 2004/080049

(57) **Abstract**

A communication system includes an information terminal apparatus having at least a data collecting portion for collecting appliance information of an appliance, a data processing server apparatus and a communication device which can be communicated with the information terminal apparatus, and first and second communication networks for connection between the information terminal apparatus and the data processing server apparatus. The first communication network is a communication configuration with a high speed digital transmission technique, and the second communication network is another communication configuration providing service for telephone subscribers. The information terminal apparatus communicates the appliance information with the data processing server apparatus through the first communication network, and uses the second communication network for communicating a particular appliance information with the communication device.

## Description

### BACKGROUND OF THE INVENTION

### 1) Technical field of the Invention

The present invention relates to an information terminal apparatus which can collect information from one or more appliances provided in a house, and in particular, relates to the information terminal apparatus, a communication system, a communication process, and a program thereof, in which one of the appliances is structured as a sensor.

### 2) Description of Related Arts

As property crimes such as a house-breaking by lock-picking have recently been increased in number, demands for a monitoring system for the house is increased. The conventional monitoring system includes a plurality of detecting appliances for detecting an intruder and a central processing apparatus collecting information from the detecting appliances and making an alert. Also, the information terminal apparatus which memorizes security modes and displays alert information has recently been developed (see JPA 05-0064910). Another monitoring system has been proposed, which performs various processes upon receiving a password (see JPA 2000-200396). Further, there is a system as a disaster prevention system, in which a plurality of transmitting means transmits information to the outside via a communication network (see JPA 2002-298250).

Among the aforementioned conventional system, according to the system including a plurality of detecting appliances for detecting the intruder and the central processing apparatus for collecting information from the detecting appliances to make an alert, if the intruder coming from the outside is detected when the resident is out of the house, the system gives, for example, an alarm sound inside and around the house noticing of the intruder. However, the resident outside at that time may not realize the current situation and learn the circumstance after he or she comes back home.

Also, in the system which a plurality of the transmitting means transmits information outside via a communication network, when one of the transmitting means is busy for another communication, another monitoring means monitors the transmitting means, and after a time-out error is determined, for example, another one of transmitting means is switched. During this time, data to be transmitted outside can not instantly be transmitted.

By the way, among the infrastructure associated with the information appliances inside the house, fairly high assuredness is required in noticing the aforementioned sensing information. Further, sensor appliance information includes management information for avoiding risks. Therefore, such sensor appliance information is required to securely be notified to a predetermined outside person even if the resident is outside the house.

However, in the system where the communication path to the communication network such as the Internet network relies solely on the dial-up connection, the connection condition and the connection simultaneity may have a problem in accordance with access status to intermediary stations and other's disturbance. Meanwhile, when the dial-up connection is solely used for the communication network, deterioration of reliability of the communication is inevitable, which may be a problem at emergency, in particular. The present invention is made to address the problem.

The communication network is a communication configuration with a (flat rate) high speed digital transmission technique where a constant rate such as 2,000 yen per month is charged regardless the connection time. Thus, one example of such communication configurations is ADSL (Asymmetric Digital Subscriber Line) Internet network, having high communication speed. While it is often used for always-on connection because of the low cost, it may likely be exposed to risks of illegal access from the outside and may likely be influenced by the access status to the intermediary stations. On the other hand, according to a typical pay-by-connection communication configuration where ten yen for example is charged for one minute connection, i.e., the analog communication configuration providing service for telephone subscribers, there is a drawback in the communication speed for a pile of data, while high security and assuredness can be achieved since connection is made only when required. Also, of course, unless the user makes a phone call, connection cannot be established. Therefore, it is the communication configuration unsuitable for always-on connection.

### Disclosure of Invention

The present invention was made to solve the aforementioned drawbacks.

A preferred embodiment of the present invention is a communication system. The communication system includes an information terminal apparatus having at least a data collecting portion for collecting appliance information of an appliance, a data processing server apparatus and a communication device which can be communicated with the information terminal apparatus, and first and second communication networks for connection between the information terminal apparatus and the data processing server apparatus. The first communication network is a communication configuration with a high speed digital transmission technique, and the second communication network is another communication configuration providing service for telephone subscribers. The information terminal apparatus communicates the appliance information with the data processing server apparatus through the first communication network, and uses the second communication network for communicating a particular appliance information with the communication device.

Another preferred embodiment of the present invention is an information terminal apparatus. The information terminal apparatus includes a data collecting portion for collecting appliance information of an appliance, first and second transceivers connected with first and second communication networks for communicating the collected appliance information with a data processing server apparatus or a communication device, and a data processing portion switching to the second communication network only in case where particular appliance information is transmitted to the communication device.

Further another preferred embodiment of the present invention is a communication process The communication process includes a collecting step for collecting appliance information of an appliance by means of an information terminal apparatus, a first transmitting step for transmitting the collected appliance information to a data processing server apparatus through a first communication network, and a second transmitting step for transmitting the collected appliance information to the communication device through a second communication network, only if the collected appliance information includes particular appliance information.

### Brief Description of Drawings

Fig. 1 is a block diagram illustrating a schematic architecture of a communication system according to the first embodiment of the present invention.
Fig. 2 is a functional block diagram of the information terminal apparatus used for the first embodiment of the present invention.
Fig. 3 is a block diagram illustrating a schematic architecture of a communication system according to the second embodiment of the present invention.
Fig. 4 is a functional block diagram of the information terminal apparatus used for the second embodiment of the present invention.
Fig. 5 is a flowchart illustrating an example of the communication process according to the second embodiment of the present invention.
Fig. 6 is a flowchart illustrating the communication process according to the third embodiment of the present invention.
Fig. 7 is a flowchart illustrating the communication process according to the fourth embodiment of the present invention.

### Best Mode for Carrying Out the Invention

Referring to the drawings, various embodiments of the present invention will be described herein.

### First Embodiment

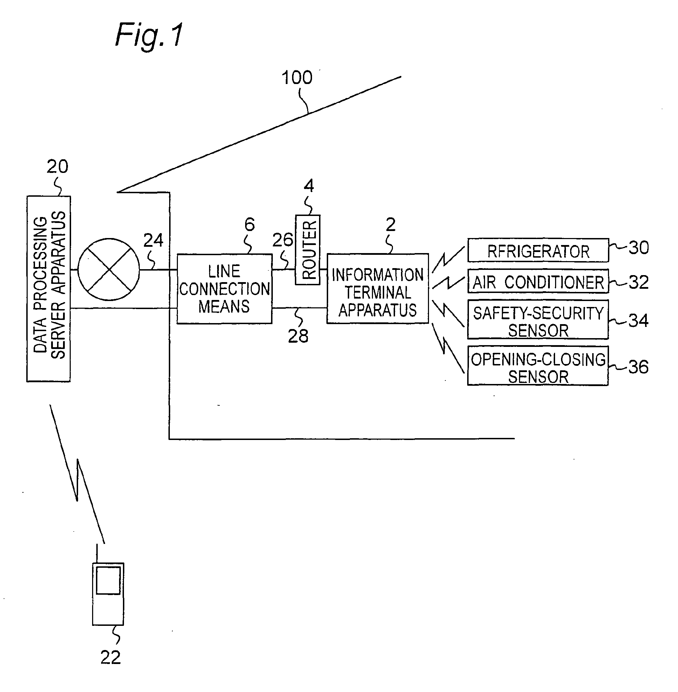

Fig. 1 is a block diagram illustrating a schematic architecture of a communication system according to the first embodiment of the present invention. The communication system includes an information terminal apparatus 2, a router 4 for allowing the information terminal apparatus 2 to be connected with the outside, line connection means 6, an outside-house network 24 located outside a house, a communication device 22 such as a telephone outside the house, and a data processing server apparatus 20. The information terminal apparatus 2 is connected via a wireless communication device with household appliances such as a refrigerator 30 and an air conditioner 32 and with security (sensor) appliances such as a safety-security sensor 34 and an opening-closing sensor 36.

The communication networks connected with the information terminal apparatus 2 includes an Internet network 26 as the communication configuration using a high speed digital transmission technique and a telephone network 28 as the communication configuration providing service for telephone subscribers. In the present application, the high speed digital transmission technique is referred to as one having the transmission speed of several hundreds kilo bps or more.

The information terminal apparatus 2 communicates data with (i.e., collects data from and transmits to) each of the household appliances and security appliances. Also, it processes data collected as above and data input from input means, and transmits data to the data processing server apparatus 20 and the communication device 22 outside the house through the router 4, the line connection means 6, and outside-house network 24.

Firstly, the information terminal apparatus 2 may communicate with the outside through the Internet network 26 as the communication configuration using a high speed digital transmission technique. In particular, the information terminal apparatus 2 uses the analog telephone network for the dial-up connection (PPP connection) to an Internet Service Provider (ISP) via the line connection means such as a modem and a splitter, and communicates with the data processing server apparatus 20 outside the house via the outside-house network (WEB) by establishing TCP/IP (Transmission Control Protocol/Internet Protocol) connection. Also, the information terminal apparatus 2 may communicate data with the outside by establishing the ADSL connection directly with the data processing server apparatus 20 via the router 4 and the line connection means 6, using the ADSL network as a broadband network. Also, the network used for communication between the information terminal apparatus 2 and the outside may be a fiber-optics network such as FTTH (Fiber-TO-The-Home) and a cable TV network.

In the information terminal apparatus 2, the telephone network 28 is used for transmitting particular appliance information. The particular appliance information is referred to as information, for example, indicating an accident requiring emergent response. For example, suppose a situation where the information terminal apparatus 2 is set as being in time duration when no person stays in the house 100. At this moment, the safety-security sensor 34 detects a person's existence so as to output a detection signal (information) that is wirelessly transmitted to the information terminal apparatus 2. Then, the information terminal apparatus 2 make connection with the outside communication device 22 such as a cellular phone, and directly informs of the appliance information via the telephone network 28. Thus, the telephone network 28 is used because of its assuredness and high reliability.

The above particular appliance information includes,
(1) the detection signal of the safety-security sensor 34; and
(2) the detection signal of the opening-closing sensor 36 which senses whether the door opens. When the information terminal apparatus 2 receives those signals, the signal indicating the detected accident is transmitted, for example, to the cellular phone of the resident via the telephone network 28.

Also, the appliance information includes,
(3) a signal indicating failure of the household appliances (e.g., refrigerator 30); and
(4) a signal output from the household appliances (e.g., air conditioner 32) indicating that the household appliances needs maintenance.
When the information terminal apparatus 2 receives those signals, the signals indicating the detected accident are transmitted, for example, to the cellular phone of the resident via the telephone network 28 and to the communication device (such as a facsimile machine) of a person and/or a company having a repair agreement or a maintenance agreement for the household appliances.

Further, when the information terminal apparatus 2 is connected with the data processing server apparatus 20 through the telephone network 28, the information indicating the accident requiring emergent response can be stored as historical data in a memory of the data processing server apparatus 20.

Also, the communication devices such as the cellular phone connected with the information terminal apparatus 2 via the telephone network 28 can be used for producing a speech from the information terminal apparatus 2 or the safety-security sensor 34. However, in this instance, the information terminal apparatus 2 and/or the safety-security sensor 34 require a speech processing feature (function). Thus, production of speech in the house may effectively threaten the intruder.

The communication device 22 outside the house may include a laptop computer and a personal data assistant (PDA) device.

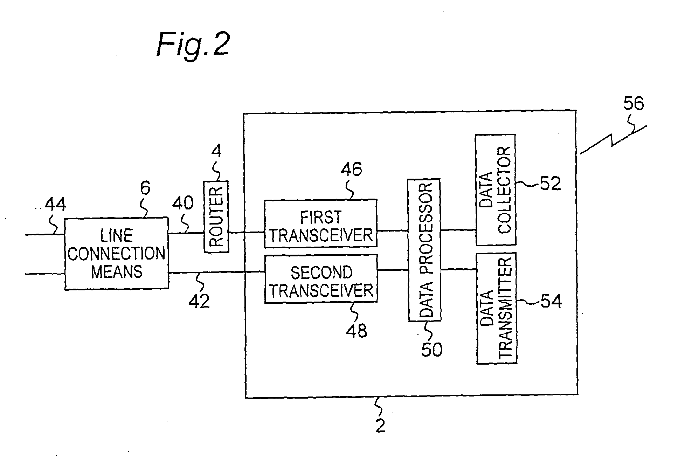

Next, referring to Fig. 2, the information terminal apparatus 2 of the first embodiment will be described in detail. Fig. 2 is a functional block diagram of the information terminal apparatus 2 used for the first embodiment of the present invention.

The information terminal apparatus 2 of Fig. 2 includes a first transceiver 46 communicating data with the Internet network 40, a second transceiver 48 communicating data with the telephone network 42, a data processor 50, a data collector 52, and a data transmitter 54. In the information terminal apparatus 2, the data collector 52 collects (receives) data from each of the household appliances, and the data transmitter 54 transmits data to each of the household appliances. The data so collected is processed in the data processor 50 and transmitted by the first transceiver 46 or the second transceiver 48 via the router 4 and the line connection means 6 to the outside. The communication network includes the telephone network 42 and the Internet network 40.

When the information terminal apparatus 2 processes the data from each of the appliances at the data processor 50, and if the data is determined as one of the particular appliance information, then the information terminal apparatus 2 uses the telephone network 42 for transmitting the particular appliance information to the outside. Thus, while the information terminal apparatus 2 uses the Internet network 40 for transmitting regular information of the household appliances, if the opening-closing sensor 36 detects opening or closing of the door and wirelessly transmits the detection signal to the information terminal apparatus 2, then once the information terminal apparatus 2 determines that the accident requiring the emergent response happens, the information terminal apparatus 2 makes a direct connection with the outside communication device 22 such as the cellular phone through the telephone network 42.

It should be noted that the sensor appliances may include a gas sensor, an odor sensor, and a pressure sensor. In addition, it may include sensors detecting abnormal usage of gas, electricity, or water, which are provided with gas, electricity, or water meter. After all, any type of sensors in the house may be incorporated in the system.

According to the first embodiment, the data output from the sensor appliances which indicates the accident requiring the emergent response can securely be transmitted to the resident outside the house. Also, any other data indicating events requiring no special consideration such as a setting data of the household appliances may be transmitted through the Internet network 26 with the flat rate, i.e., at a low cost.

### Second Embodiment

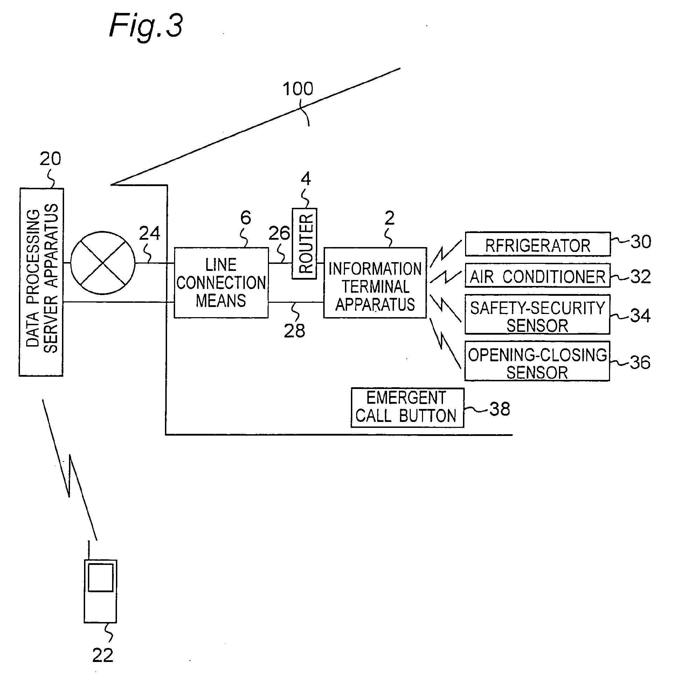

Fig. 3 is a block diagram illustrating a schematic architecture of a communication system according to the second embodiment of the present invention. The second embodiment shown in Fig. 3 has the architecture substantially the same as the first embodiment. Therefore, the same components are denoted with the same reference numerals, and duplicate description will be eliminated. The communication system of the second embodiment illustrated in Fig. 3 includes another security appliance, i.e., an emergency call button 38.

Once the communication system of the second embodiment of Fig. 3 receives a call signal from the emergency call button 38, it assigns the highest priority to transmit the call signal to the outside. Thus, information terminal apparatus 2, (1) uses the telephone network 28, and (2) transmits the call signal immediately to the outside.

At this moment, if the information terminal apparatus 2 is connecting with the communication device 22 for transmitting another data from other sensing appliances, the information terminal apparatus 2 may disconnect or interrupts the connection so as to establish another connection to an emergent addressee of the emergent call button 38.

The emergent call button 38 is communication means carried by an elder person or a handicapped person for outputting an emergent signal with easy operation to call in other's help at physical danger. A list of the emergent addressees is stored in the memory of the data processor 50 and may include telephone number of the cellular phone of a cohabiter or a medical healthcare personnel.

According to the present embodiment, the emergent information from the emergent call button 38 is transmitted through the telephone network 28 of which connection is established by the information terminal apparatus 2 to the outside addressee in a secure and quick manner.

Also, in the present embodiment, the communication device 22 such as the cellular phone to be connected with the information terminal apparatus 2 via the telephone network 28 may be used for making a speech spoken from the information terminal apparatus 2 thereby to confirm the safety of the person carrying the emergency call button 38. In this instance, the information terminal apparatus 2 requires a (conventional) speech processing function.

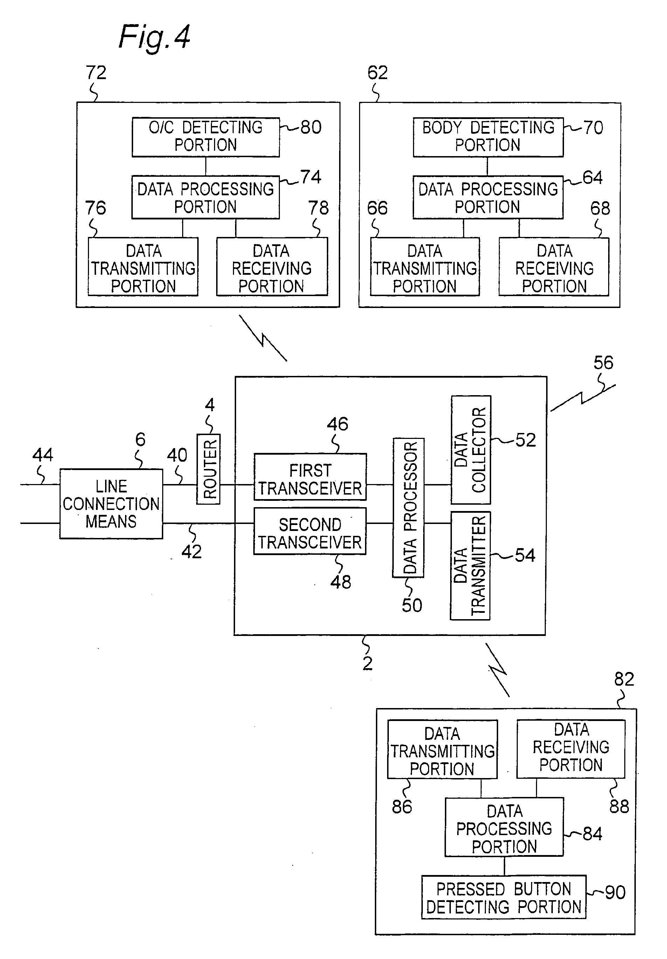

Next, referring to Fig. 4, the information terminal apparatus 2 and the terminal appliance (the household appliance, the security appliance, and the emergency call button) will be described herein. Fig. 4 is a functional block diagram of the information terminal apparatus and the terminal appliances according to the second embodiment of the present invention.

The information terminal apparatus of Fig. 4 includes a first transceiver 46 for communicating data through the Internet network 40, a second transceiver 48 for communicating data through the telephone network 42, a data processing portion 50, a data collecting portion 52, and a data transmitting portion 54. The terminal appliances 62, 72, 82 which are connected to the information terminal apparatus 2 via wireless communication include data receiving portions 68, 78, 88, data transmitting portions 66, 76, 86, and detecting portions 70, 80, 90, respectively. In those terminal appliances 62, 72, 82, the sensing signals detected by detecting portions 70, 80, 90 are transmitted to the information terminal apparatus 2, in which the data collecting portion 52 collects the data. Also, the data transmitting portion 54 transmits data to each of the terminal appliances 62, 72, 82. Those collected data are processed by the data processing portion 50, and the first or second transceiver 46, 48 communicates the data with the outside via the router 4 and the line connection means 6. The communication networks used in this instance include the telephone network 42 and the Internet network 40.

When the data processing portion 50 of the information terminal apparatus 2 processes the data collected from each of the terminal appliances, if the data processing portion 50 determines that the data is the "particular appliance information", the data processing portion 50 uses the telephone network 42 for transmitting the particular appliance information to the outside. Thus, while the information terminal apparatus 2 uses the Internet network 40 for transmitting regular information of the household appliances, if the opening-closing sensor 36 of the terminal appliance 72 detects opening or closing of the door and wirelessly transmits the detection signal to the information terminal apparatus 2, then the information terminal apparatus 2 determines that the accident requiring the emergent response happens so that it can make a connection with the outside communication device 22 such as the cellular phone directly through the telephone network 42.

Further, when the information terminal apparatus receives a call signal from the emergent call button 82, among the terminal appliances, it assigns the highest priority to transmit the call signal to the outside. Thus, the information terminal apparatus 2, (1) uses the telephone network 42 and (2) transmits data to the outside immediately upon receipt of the call signal. At this moment, if the information terminal apparatus 2 is connecting with the communication device 22 for transmitting another data from other sensing appliances, the information terminal apparatus 2 may disconnect or interrupts the connection so as to establish another connection to an emergent addressee of the emergent call button 38.

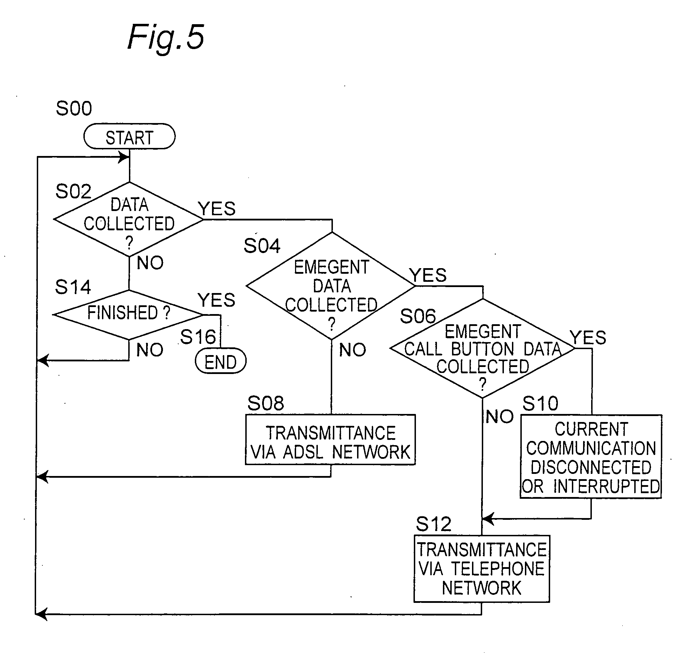

Next, a flowchart of Fig. 5 illustrating an example of the communication process according to the second embodiment of the present invention will be described herein.

The information terminal apparatus 2, all the time, awaits data output from the terminal appliances (Step S02). Upon receipt of the data from the terminal appliances, the information terminal apparatus 2 determines whether the data is the "particular appliance information" (Step S04). If the data is not the "particular appliance information", then the data is transmitted through the Internet network (e.g., ADSL network) to the data processing server apparatus (Step S08). If the data is the "particular appliance information", then the information terminal apparatus 2 determines whether the data is the pressed button signal output from the emergent call button (Step S06). If the data is the pressed button signal output from the emergent call button, and even if the telephone network is busy at that time, the communication via the telephone network is disconnected or interrupted (Step S10). Immediately after this, in order to improve the quality of the communication through the telephone network (the communication through the telephone network at Step S12), the communication through the ADSL network may be disconnected or interrupted. Then, the pressed button signal indicating that the emergent call button is pressed is transmitted to the outside (Step S12). Also, in case where the data is not pressed button signal (Step S06), since the data indicates that the accident requiring the emergent response is in fact occurring, the occurring accident is informed via the telephone network to the outside (Step S12). In the information terminal apparatus 2, when the termination step is done, the process is terminated (Step S14, Step S16).

The flowchart of Fig. 5 is merely an example and any other processes achieving the present embodiment can be conceived.

### Third Embodiment

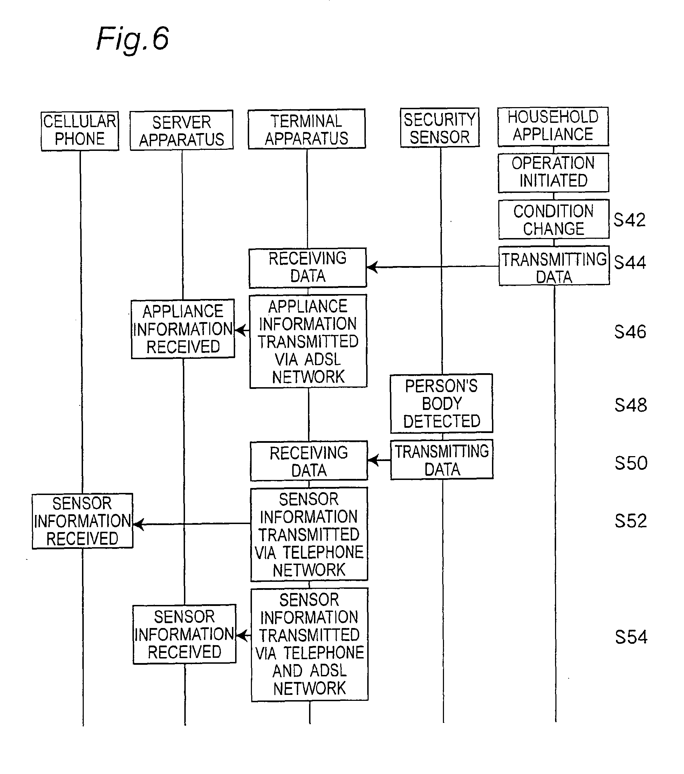

Fig. 6 is another flowchart showing an example of the communication process of the communication system according to the third embodiment of the present invention. The flowchart will be described herein.

Firstly, operation of the household appliances such as a laundry machine and an air conditioner and the security appliances such as an opening-closing sensor is initiated. When the condition of the household appliances changes, e.g., when the air conditioner is failed (Step S42), the data of the household appliance is transmitted from the data transmitting portion of the household appliance and received by the data receiving portion of the information terminal apparatus (Step S44). The information terminal apparatus may transmit the collected data to the data processing server apparatus through the Internet network such as the ADSL network (Step S46). For example, when the air conditioner is failed or when the refrigerator needs maintenance, those data are transmitted from each of the household appliances and collected by the information terminal apparatus, which may in turn be transmitted to the data processing server apparatus through the ADSL network.

Meantime, when the sensor appliance detects or react with something, e.g., when the safety-security sensor detects an intruder (Step S48), the data indicating information the sensor appliance detects is transmitted from the data transmitting portion of the sensor appliance and received by the data receiving portion of the information terminal apparatus (Step S50). The information terminal apparatus which collects the data of the sensor appliance transmits the data to the outside communication device such as the cellular phone through the telephone network (Step 52), without using the Internet network such as the ADSL network. When the safety-security sensor detects the intruder or when the opening-closing sensor detecting the door opening or closing, those data are transmitted from the sensor appliances and collected by the information terminal apparatus, the information terminal apparatus acknowledges those data as being the sensor data, and transmits the sensor data to the cellular phone through the telephone network. Also, soon later, an emergent data is transmitted from the information terminal apparatus to the data processing server apparatus (Step S54). A major portion of the emergent data from those sensors may be transmitted as a first report from the information terminal apparatus to the data processing server apparatus via the telephone network. The content of the first report requires promptness and assuredness in transmitting a telephone number, an address, a name of a sending place, etc. In case where the data including the telephone number, the address, and the name of the using place, are stored in the data processing server apparatus, the content of the first report may include only the telephone number of the sending place. Subsequently, another connection is made from the information terminal apparatus to the data processing server apparatus though the information communication network such as the Internet network so that the secondary emergent information is transmitted from the sensor to the data processing server apparatus. The content of such secondary report includes detailed information of the abnormal circumstances. The contents of the first and second reports may be stored in the data processing server apparatus as historical data.

### Fourth Embodiment

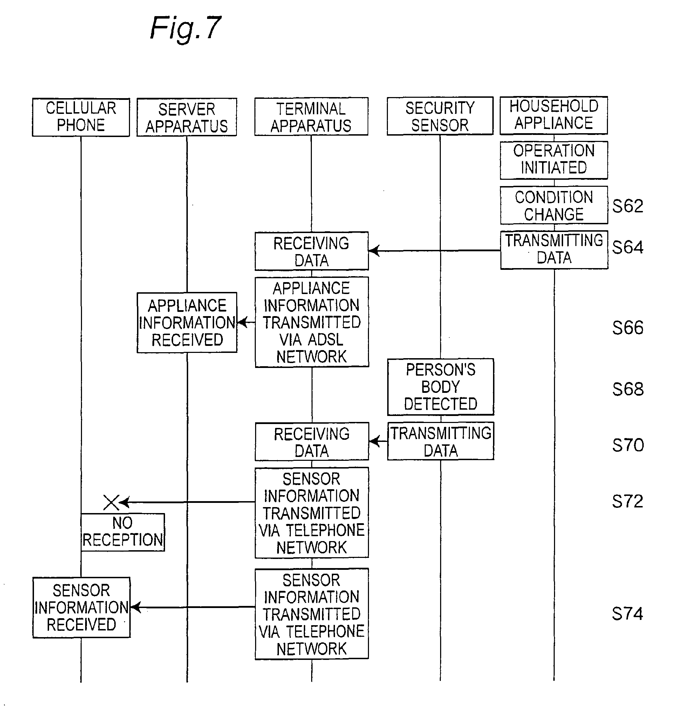

Fig. 7 is another flowchart showing an example of the communication process of the communication system according to the fourth embodiment of the present invention. The flowchart will be described herein.

Firstly, operation of the household appliances such as a laundry machine and an air conditioner and the security appliances such as an opening-closing sensor is initiated. When the condition of the household appliances changes, e.g., when the air conditioner is failed (Step S62), the data of the household appliance is transmitted from the data transmitting portion of the household appliance and received by the data receiving portion of the information terminal apparatus (Step S64). The information terminal apparatus may transmit the collected data to the data processing server apparatus through the Internet network such as the ADSL network (Step S66). For example, when the air conditioner is failed or when the refrigerator needs maintenance, those data are transmitted from each of the household appliances and collected by the information terminal apparatus, which may in turn be transmitted to the data processing server apparatus through the ADSL network.

Meantime, when the sensor appliance detects or react with something, e.g., when the safety-security sensor detects an intruder (Step S68), the data indicating information the sensor appliance detects is transmitted from the data transmitting portion of the sensor appliance and received by the data receiving portion of the information terminal apparatus (Step S70). The information terminal apparatus which collects the data of the sensor appliance transmits the data to the outside communication device such as the cellular phone through the telephone network (Step S72), without using the Internet network such as the ADSL network. When the safety-security sensor detects the intruder or when the opening-closing sensor detecting the door opening or closing, those data are transmitted from the sensor appliances and collected by the information terminal apparatus, the information terminal apparatus acknowledges those data as being the sensor data, and transmits the sensor data to the cellular phone through the telephone network.

At this time, if the cellular phone of the emergent addressee is busy on another line and cannot receive the sensor information from the information terminal apparatus, the information terminal apparatus may quit calling and transmit the data to another communication device (cellular phone) of the emergent addressee (Step S74).

In the above system, since a plurality of communication devices of the emergent addressees can be stored in the information terminal apparatus, even if one of the emergent addressees is not available to receive the data, the information terminal apparatus can transmit the data to the next best candidate.

### Other Embodiments

In the present invention, the communication device may include a regular analog telephone and as well as the cellular phone and the PHS (Personal Handyphone System) of the digital line.

Also, with use of the outside communication devices such as the cellular phone, in order to achieve the above-described information terminal apparatus and the communication system, a unique program that is computer readable is required for performance of the CPU in the information terminal apparatus.

### Advantages of Invention

As above, according to the present invention, the information terminal apparatus uses, in general, a first communication network to connect the data processing server apparatus, however if it receives particular appliance information of the sensor appliances etc., it uses the second communication network to the communication device. This allows the resident to understand the status of the house in a secured manner, even when the resident is out of the house. In particular, in case where the information terminal apparatus collects the appliance information from the sensor appliances including the safety-security sensor for detecting existence or absence of the person (person's body), the opening-closing sensor for detecting the door opening or closing, and the emergent call button always possessed by the resident and used if the resident feels uncomfortable, the information terminal apparatus uses the second communication network to connect with the communication device so that the appliance information from the sensor appliance can immediately be transmitted to the communication device in reliable and secured manner.

Therefore, the data from the sensor appliance can certainly be transmitted to the resident even if he or she is out of the house. Also, the situation where the important information of safety cannot be transmitted to the resident outside the house is avoided to improve the reliability of the system of safety management.

## Claims

1. A communication system, comprising:
an information terminal apparatus having at least a data collecting portion for collecting appliance information of an appliance;
a data processing server apparatus and a communication device which can be communicated with said information terminal apparatus;
first and second communication networks for connection between said information terminal apparatus and said data processing server apparatus;
said first communication network being a communication configuration with a high speed digital transmission technique; and
said second communication network being another communication configuration providing service for telephone subscribers;
wherein said information terminal apparatus communicates the appliance information with said data processing server apparatus through said first communication network, and uses said second communication network for communicating a particular appliance information with said communication device.

2. A communication system, comprising:
an information terminal apparatus having at least a data collecting portion for collecting appliance information of an appliance;
a data processing server apparatus and a communication device which can be communicated with said information terminal apparatus;
a first communication network for connection between said information terminal apparatus and said data processing server apparatus;
a second communication network for connection between said information terminal apparatus and said communication device;
said first communication network being a communication configuration with a high speed digital transmission technique; and
said second communication network being another communication configuration providing service for telephone subscribers;
wherein said information terminal apparatus communicates the appliance information with said data processing server apparatus through said first communication network, and uses said second communication network for communicating a particular appliance information with said communication device.

3. The communication system according to Claim 1 or 2,
wherein if said first or second communication network is busy at the time just before the particular appliance information is being transmitted to the communication device through the second communication network, said information terminal apparatus disconnects or interrupts said first or second communication network.

4. The communication system according to one of Claims 1-3,
wherein said information terminal apparatus makes connection with said data processing server apparatus through said second communication network and transmits a first portion of the particular appliance information through said second communication network; and
wherein said information terminal apparatus makes connection with said data processing server apparatus through said first communication network and transmits a second portion of the particular appliance information through said first communication network.

5. The communication system according to one of Claims 1-4,
wherein the particular appliance information is information from a sensor appliance indicting an accident which requires an emergent response; and
wherein the particular appliance information is transmitted to said data processing server apparatus or said communication device.

6. The communication system according to Claim 5,
wherein if the information from the sensor appliance indicting the accident which requires the emergent response is a pressed button signal output from an emergent call button, the information terminal apparatus assigns the highest priority to transmit the pressed button signal of the emergent call button through the second communication network.

7. The communication system according to one of Claims 1-6,
wherein a data relating to connection of a plurality of communication devices is stored with a priority sequence in a memory of said information terminal apparatus; and
wherein said information terminal apparatus tries to communicate with the communication devices in accordance with the priority sequence, and if connection with one of the communication devices in the priority sequence is not completed, then said information terminal apparatus tries to communicate with the next one of the communication devices in the priority sequence.

8. An information terminal apparatus, comprising:
a data collecting portion for collecting appliance information of an appliance;
first and second transceivers connected with first and second communication networks for communicating the collected appliance information with a data processing server apparatus or a communication device;
a data processing portion switching to the second communication network only in case where particular appliance information is transmitted to the communication device;
said first communication network being a communication configuration with a high speed digital transmission technique; and
said second communication network being another communication configuration providing service for telephone subscribers.

9. The information terminal apparatus according to Claim 8,
wherein if said first or second communication network is busy at the time just before the particular appliance information is being transmitted to the communication device through the second communication network, said information terminal apparatus disconnects or interrupts said first or second communication network.

10. The information terminal apparatus according to Claim 8 or 9,
wherein connection with said data processing server apparatus is made through said second communication network and a first portion of the particular appliance information is transmitted to said data processing server apparatus through said second network; and
wherein connection with said data processing server apparatus is made through said first communication network, and a second portion of the particular appliance information is transmitted to said data processing server apparatus through said first network.

11. The information terminal apparatus according to one of Claims 8-10,
wherein the particular appliance information is information from a sensor appliance indicting an accident which requires an emergent response; and
wherein the particular appliance information is transmitted to said data processing server apparatus or said communication device.

12. The information terminal apparatus according to Claims 11,
wherein if the information from the sensor appliance indicting the accident which requires the emergent response is a pressed button signal output from an emergent call button, the information terminal apparatus assigns the highest priority to transmit the pressed button signal of the emergent call button through the second communication network.

13. The information terminal apparatus according to one of Claims 8-12,
wherein a data relating to connection of a plurality of communication devices is stored with a priority sequence in a memory of said information terminal apparatus; and
wherein said information terminal apparatus tries to communicate with the communication devices in accordance with the priority sequence, and if connection with one of the communication devices in the priority sequence is not completed, then said information terminal apparatus tries to communicate with the next one of the communication devices in the priority sequence.

14. A communication process, comprising:
a collecting step for collecting appliance information of an appliance by means of an information terminal apparatus;
a first transmitting step for transmitting the collected appliance information to a data processing server apparatus through a first communication network of a communication configuration with a high speed digital transmission technique; and
a second transmitting step for transmitting the collected appliance information to the communication device through a second communication network of another communication configuration providing service for telephone subscribers, only if the collected appliance information includes particular appliance information.

15. The communication process according to Claim 14, further comprising:
a disconnecting step for disconnecting or interrupting existing communication through the first or second network, if the first or second communication network is busy at the time just before the second transmitting step in which the particular appliance information is being transmitted to the communication device through the second communication network.

16. The communication process according to Claim 14 or 15, further comprising:
a first reporting step for making connection with the data processing server apparatus and transmitting a first portion of the particular appliance information to the data processing server apparatus through the second communication network;
a second reporting step for making connection with the data processing server apparatus and transmitting a second portion of the particular appliance information to the data processing server apparatus through the first communication network.

17. A communication process, comprising:
a storing step for storing data relating to connection of a plurality of communication devices with a priority sequence in a memory of an information terminal apparatus;
a collecting step for collecting appliance information of an appliance by means of an information terminal apparatus;
a first transmitting step for transmitting the collected appliance information to a data processing server apparatus through a first communication network of a communication configuration with a high speed digital transmission technique;
a second transmitting step for transmitting the collected appliance information to the communication device through a second communication network of another communication configuration providing service for telephone subscribers, only if the collected appliance information includes particular appliance information, and trying to communicate with the next one of the communication devices in the priority sequence; and
a third transmitting step for trying to communicate with the next one of the communication devices in the priority sequence if connection with one of the communication devices in the priority sequence is not completed.

18. A computer program for an information terminal apparatus, the information terminal apparatus comprising:
a data collecting portion for collecting appliance information of an appliance;
a first transceiver connected with a first communication network of a communication configuration with a high speed digital transmission technique for communicating the collected appliance information with a data processing server apparatus or a communication device;
a second transceiver connected with a second communication network of another communication configuration providing service for telephone subscribers for communicating the collected appliance information with a data processing server apparatus or a communication device; and
a data processing portion switching to the second communication network only in case where particular appliance information is transmitted to the communication device;
wherein the computer program is used for implementing each of functions of the components of the information terminal apparatus.
